# EUROPEAN PATENT APPLICATION

(11) **EP 4 685 022 A1**
(43) Date of publication of application: **28.01.2026**
(21) Application number: 24774460.0
(22) Date of filing: 31.01.2024
(51) Int. Cl.: B60T 8/94, B60T 8/17, B60T 8/176, B60T 13/68, B60T 13/138

(54) **VEHICLE BRAKE SYSTEM**

(30) Priority: 22.03.2023 JP 2023045894
(71) Applicant: Astemo, Ltd., Chiyoda-ku, Tokyo 1000004 (JP)
(72) Inventor: KOBAYASHI, Masashi, Ueda-shi, Nagano 386-0016 (JP); AOKI, Yasushi, Ueda-shi, Nagano 386-0016 (JP)
(74) Representative: Weickmann & Weickmann PartmbB
(86) International application number: PCT/JP2024/003179
(87) International publication number: WO 2024/195314

(57) **Abstract**

An object of the present invention is to provide a vehicle brake system capable of executing an antilock brake control even when a hydraulic pressure control device is not operated. The hydraulic pressure generating device 1 includes master cut valves 7a, 7b for opening and closing a main hydraulic passage leading from a master cylinder 10 to a hydraulic pressure control device 2, communication passages 3a, 3b leading from a slave cylinder 30 to the main hydraulic passage 1a, 1b, shut-off valves 8a, 8b, for opening and closing the communication passages, and a control device 4. The control device 4 is configured to generate brake hydraulic pressure from the slave cylinder 30 when the hydraulic pressure control device 2 is not operated, and to perform antilock brake control by controlling the master cut valves 7a and 7b and the shut-off valves 8a and 8b for each of the first main hydraulic passage 1a and the second main hydraulic passage 2b according to a slip state of the wheel.

## Description

### [Technical Field]

The present invention relates to a brake system for a vehicle.

### [Background Art]

Conventionally, a vehicle brake system is known which includes a master cylinder that generates a brake fluid pressure in accordance with a depression force on a brake pedal, a slave cylinder that generates a brake fluid pressure by driving an electric actuator, and a fluid pressure control device that assists stabilization of a behavior of a vehicle by controlling a brake fluid pressure acting on a wheel brake (for example, see Patent Document 1).

### [Prior Art Document]

### [Patent Document 1]

[Patent Document 1] Japanese Patent Application Publication No. 2012 - 210879

### [Summary of the Invention]

### [Problem to be Solved by the Invention]

The vehicle brake system described in Patent Document 1 is configured to control the brake fluid pressure acting on the wheel brake by the fluid pressure control device, and thus the vehicle cannot execute the antilock brake control when the fluid pressure control device is not operated.

The present invention has been made to solve the above problems, and an object of the present invention is to provide a vehicle brake system capable of executing an antilock brake control even when a hydraulic pressure control device is not operated.

### [Means for Solving the Problem]

In order to solve the above problem, a vehicle brake system of the present invention includes a hydraulic pressure generating device including a master cylinder that generates a brake hydraulic pressure in accordance with an operation amount of a brake operator and a slave cylinder that generates a brake hydraulic pressure by driving an electric actuator; and a hydraulic pressure control device that controls a brake hydraulic pressure acting on a wheel brake by a brake hydraulic pressure from the hydraulic pressure generation device, wherein the hydraulic pressure generation device includes: a master cut valve that opens and closes a main hydraulic passage leading from the master cylinder to the hydraulic pressure control device, a communication passage leading from the slave cylinder to the main hydraulic passage on a downstream side of the master cut valve, a shut-off valve that opens and closes the communication passage, and a control device that controls operations of the slave cylinder, the master cut valve, and the shut-off valve, wherein the main hydraulic passage includes a first main hydraulic passage communicating with at least one of a plurality of wheel brakes and a second main hydraulic passage communicating with remaining wheel brakes, wherein the master cut valve, the communication passage, and the shut-off valve are provided in each of the first main hydraulic passage and the second main hydraulic passage, wherein the control device controls, when the hydraulic pressure control device is not operated, the slave cylinder to generate a brake hydraulic pressure, and performs antilock brake control by controlling the master cut valve and the shut-off valve for each of the first main hydraulic passage and the second main hydraulic passage based on a slip state of wheels.

In the vehicle brake system of the present invention, when the hydraulic pressure control device is not operated, the slave cylinder, the master cut valve, and the shut-off valve of the hydraulic pressure generation device are controlled by the control device, whereby the vehicle can execute the anti-lock brake control. Therefore, even when the hydraulic pressure control device fails, the vehicle can execute the antilock brake control according to the slip state of the wheel.

The master cut valve is preferably a normally open type on-off valve, and the shut-off valve is preferably a normally closed type on-off valve.

According to this configuration, the vehicle can execute the anti-lock brake control when the hydraulic pressure control device is not operated with a simple system configuration using the normally open on-off valve and the normally closed on-off valve, and thus the cost can be reduced.

The master cylinder may include two pressure chambers and the vehicle brake system may be configured to output hydraulic pressures generated in the two pressure chambers to the first main hydraulic passage and the second main hydraulic passage, respectively, wherein the slave cylinder includes two slave cylinder pressure chambers and the vehicle brake system is configured to output hydraulic pressures generated in the two slave cylinder pressure chambers to the first main hydraulic passage and the second main hydraulic passage, respectively.

According to this configuration, when the hydraulic pressure control device is not operated, the vehicle can suitably realize the anti-lock brake control for each of the first main hydraulic passage and the second main hydraulic passage by the brake hydraulic pressures generated in the two slave cylinder pressure chambers. Therefore, the vehicle brake system can be obtained which is excellent in the transmission performance of the brake fluid and can suitably realize the anti-lock brake control when the hydraulic pressure control device is not operated.

Further, when the brake hydraulic pressure of at least one of the first main hydraulic passage and the second main hydraulic passage is increased during the antilock brake control, the control device may close the master cut valve of the hydraulic passage to be increased in pressure and opens the shut-off valve of the hydraulic passage to be increased in pressure, and applies the brake hydraulic pressure generated in the slave cylinder to the hydraulic passage to be increased in pressure.

According to this configuration, in the antilock brake control when the hydraulic pressure control device is not operated, the vehicle can suitably increase the pressure of the hydraulic passage to be increased in pressure by controlling the master cut valve, the shut-off valve, and the slave cylinder.

Further, when a brake fluid pressure of at least one of the first main hydraulic passage and the second main hydraulic passage is to be reduced during the antilock brake control, the control device may close the master cut valve of the hydraulic passage to be reduced in pressure and opens the shut-off valve of the hydraulic passage to be reduced in pressure, and controls the electric actuator to drive the piston of the slave cylinder in a pressure reducing direction.

According to this configuration, in the antilock brake control when the hydraulic pressure control device is not operated, the vehicle can suitably reduce the pressure of the hydraulic passage to be reduced in pressure by controlling the master cut valve, the shut-off valve, and the slave cylinder.

Further, when a brake fluid pressure of at least one of the first main hydraulic passage and the second main hydraulic passage is held during the antilock brake control, the control device may close the master cut valve of the hydraulic passage to be held and closes the shut-off valve of the hydraulic passage to be held.

According to this configuration, in the antilock brake control when the hydraulic pressure control device is not operated, the vehicle can suitably hold the hydraulic passage to be held by controlling the master cut valve, the shut-off valve, and the slave cylinder.

Further, when a brake fluid pressure in at least one of the first main hydraulic passage and the second main hydraulic passage is to be reduced during the antilock brake control, the control device may open the master cut valve of the hydraulic passage to be reduced in pressure, closes the shut-off valve of the hydraulic passage to be reduced in pressure, and returns the brake fluid to the master cylinder side through the opened master cut valve.

According to this configuration, in the antilock brake control when the hydraulic pressure control device is not operated, the vehicle can return the brake fluid in the hydraulic passage to be reduced in pressure to the master cylinder side, and thus can increase the pressure in one hydraulic passage while reducing the pressure in the other hydraulic passage.

The vehicle brake system preferably includes a return flow passage that leads from the wheel brake to an atmospheric pressure side of the master cylinder or the reservoir; an on-off valve that opens and closes the return flow passage, wherein the control device closes the master cut valve and the shut-off valve of the hydraulic passage to be reduced in pressure and opens the on-off valve when the brake fluid pressure in at least one of the first main hydraulic passage and the second main hydraulic passage is to be reduced during the antilock brake control.

According to this configuration, in the antilock brake control when the hydraulic pressure control device is not operated, the brake fluid can be returned to the atmospheric pressure side of the master cylinder or the reservoir through the return flow passage. That is, even when the driver operates the brake operator and the brake hydraulic pressure generated in the master cylinder is applied to the first main hydraulic passage and the second main hydraulic passage, the control device can reduce the pressure of at least one of the first main hydraulic passage and the second main hydraulic passage.

The first main hydraulic passage may be communicated with the wheel brake on a front wheel side of front and rear wheels of the vehicle, and the second main hydraulic passage is communicated with the wheel brake on a rear wheel side.

In this configuration, the control device can separately control the front wheels and the rear wheels by the antilock brake control, and can suitably realize the braking force distribution between the front and rear wheels of the vehicle corresponding to the vehicle type. The control device may be configured to execute a fluid suction control for sucking the brake fluid into the slave cylinder during the antilock brake control. When the control device needs to execute the fluid suction control, the control device preferably closes the shutoff valve and controls the electric actuator to drive the piston of the slave cylinder in the fluid suction direction.

In this configuration, in the antilock brake control when the hydraulic pressure control device is not operated, when the slave piston is driven in the pressure reducing direction in a state where the shut-off valve is closed, the pressure chamber of the slave cylinder becomes a negative pressure, and the brake fluid is sucked from the upstream device into the slave cylinder. The control device can replenish the brake fluid for re-pressurization into the slave cylinder pressure chamber by the fluid suction control, and can secure the brake fluid necessary for the pressure increase. Thus, the brake system capable of increasing the hydraulic pressure to the high hydraulic pressure region while avoiding an increase in the size of the slave cylinder is obtained.

### [Effects of the Invention]

In the vehicle brake system of the present invention, the control device can execute the antilock brake control when the hydraulic pressure control device is not operated.

### [Brief Description of the Drawings]

[FIG. 1] FIG. 1 is a hydraulic circuit diagram showing a vehicle brake system according to a first embodiment of the present invention.
[FIG.2] FIG. 2 is a diagram showing a flow of brake fluid during normal brake control in the vehicle brake system according to the first embodiment of the present invention.
[FIG. 3] FIG. 3 is a diagram showing a flow of brake fluid during automatic brake control in the vehicle brake system according to the first embodiment of the present invention.
[FIG. 4] FIG. 4 is a view showing a flow of brake fluid during antilock brake control during operation of automatic brake control and non-operation of a hydraulic pressure control device in the vehicle brake system according to the first embodiment of the present invention.
[FIG.5] FIG. 5 is a view showing a flow of brake fluid during antilock brake control during operation of automatic brake control and non-operation of a hydraulic pressure control device in the vehicle brake system according to the first embodiment of the present invention.
[FIG. 6] FIG. 6 is a view showing a flow of the brake fluid at the time of the fluid suction control during the operation of the automatic brake control and during the non-operation of the hydraulic pressure control device in the vehicle brake system according to the first embodiment of the present invention.
[FIG. 7] FIG. 7 is a view showing a flow of the brake fluid during the fluid suction control during the operation of the automatic brake control and during the non-operation of the hydraulic pressure control device in the vehicle brake system according to the first embodiment of the present invention.
[FIG. 8] FIG. 8 is a diagram showing a flow of the brake fluid during the fluid suction control during the operation of the automatic brake control and during the non-operation of the hydraulic pressure control device in the vehicle brake system according to the first embodiment of the present invention.
[FIG. 9] FIG. 9 is a view showing a flow of brake fluid during antilock brake control during operation of a brake pedal and non-operation of a hydraulic pressure control device in the vehicle brake system according to the first embodiment of the present invention.
[FIG. 10] FIG. 10 is a view showing a flow of brake fluid during antilock brake control during operation of a brake pedal and non-operation of a hydraulic pressure control device in the vehicle brake system according to the first embodiment of the present invention.
[FIG. 11] FIG. 11 is a view showing a flow of brake fluid during antilock brake control during operation of a brake pedal and non-operation of a hydraulic pressure control device in the vehicle brake system according to the first embodiment of the present invention.
[FIG. 12] FIG. 12 is a hydraulic circuit diagram showing a vehicle brake system according to a second embodiment of the present invention.
[FIG. 13] FIG. 13 is a view showing a flow of brake fluid in a pressure reducing mode of antilock brake control during operation of a brake pedal and non-operation of a hydraulic pressure control device in a vehicle brake system according to a second embodiment of the present invention.
[FIG. 14] FIG. 14 is a view showing a flow of brake fluid in a pressure reducing mode of antilock brake control during operation of a brake pedal and non-operation of a hydraulic pressure control device in a vehicle brake system according to a second embodiment of the present invention.

### [DETAILED DESCRIPTION OF THE INVENTION]

Hereinafter, an embodiment of the present invention will be described in detail with reference to the drawings as appropriate. In the drawings shown below, the same members are denoted by the same reference numerals, and redundant description will be omitted. The vehicle brake system 100 of the present invention can be mounted on a hybrid vehicle using a motor in combination, an electric vehicle or a fuel cell vehicle using only a motor as a power source, or a vehicle using only an engine (internal combustion engine) as a power source.

### First Embodiment

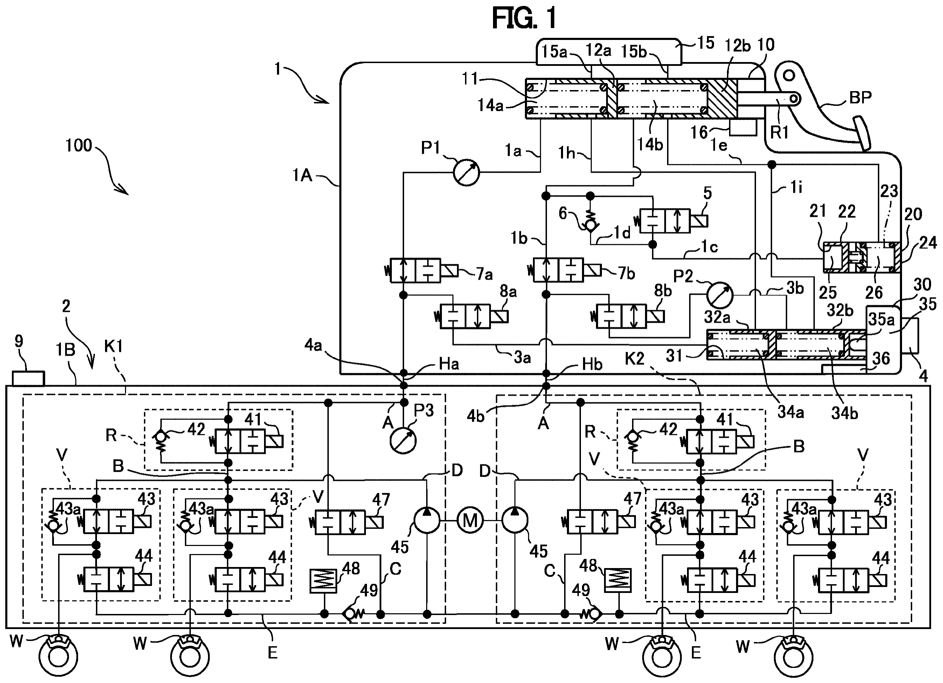

As shown in FIG. 1, the vehicle brake system 100 includes both a by-wire brake system that operates when a prime mover (such as an engine or an electric motor) is started and a hydraulic brake system that operates when the prime mover is stopped.

The vehicle brake system 100 includes a hydraulic pressure generator 1 that generates a brake hydraulic pressure according to a stroke amount (operation amount) when a driver operates a brake pedal BP (brake operator), and a hydraulic pressure controller 2 that is connected to the hydraulic pressure generator 1 and controls the brake hydraulic pressure acting on each wheel cylinder W of a wheel brake. The vehicular brake system 100 is constituted by two base bodies (two blocks) including a base body 1A to which components of the hydraulic pressure generating device 1 are attached and a base body 1B to which components of the hydraulic pressure control device 2 are attached.

The base body 1A includes a master cylinder 10, a stroke simulator 20, and a slave cylinder 30. The base body 1A may be divided into two, and the master cylinder 10 and the stroke simulators 20 may be provided on one of the divided bases, and the slave cylinder 30 may be provided on the other divided base.

The master cylinder 10 functions as an input device that generates a brake fluid pressure according to a stroke amount when a driver operates the brake pedal BP. The stroke simulator 20 applies a pseudo operation reaction force to the brake pedal BP. The slave cylinder 30 generates a brake fluid pressure by using an electric motor 36 as an electric actuator as a drive source. As described later, the slave cylinder 30 is operated during a normal brake control in which there is no possibility that each wheel brake is locked, during an antilock brake control, and during an automatic brake control for supporting stabilization of the behavior of the vehicle. The slave cylinder 30 is capable of increasing the brake fluid pressure of the wheel brake. That is, the slave cylinder 30 is responsible for the entire boosting of the brake fluid pressure of the wheel brake, and functions as a control device for executing the antilock brake control in place of the fluid pressure control device 2 when the fluid pressure control device 2 is not operated.

The master cylinder 10 is provided with two pistons 12a and 12b which are inserted into a first cylinder hole 11 of a base body 1A. A bottom side pressure chamber 14a is formed between the bottom surface of the first cylinder hole 11 and the piston 12a on the bottom side. An opening-side pressure chamber 14b is formed between the bottom-side piston 12a and the opening-side piston 12b. That is, the master cylinder 10 includes two chambers, i.e., the bottom-side pressure chamber 14a and the opening-side pressure chamber 14b. A reservoir 15 for storing brake fluid is attached to the master cylinder 10. The reservoir 15 has a feed port 15a and a feed port 15b for feeding the brake fluid to the master cylinder 10. The hydraulic pressure generated in the master cylinder 10 is configured to be outputted to each of a first main hydraulic passage 1a and a second main hydraulic passage 1b, which will be described later. The hydraulic pressure generated in the bottom-side pressure chamber 14a is output to the first main hydraulic passage 1a, and the hydraulic pressure generated in the opening-side pressure chamber 14b is output to the second main hydraulic passage 1b. The first main hydraulic passage 1a is connected to the wheel brake of the front wheel. The second main hydraulic passage 1b is connected to the wheel brake on the rear wheel side.

The distal end of the rod R1 of the brake pedal BP is connected to the piston 12b on the opening side. Both the pistons 12a and 12b slide in the first cylinder hole 11 by receiving a stepping force when a driver steps on the brake pedal BP, and pressurize the brake fluid in the bottom side pressure chamber 14a and the opening side pressure chamber 14b. A stroke sensor 16 for detecting an operation amount (depression amount) of the brake pedal BP is attached to the master cylinder 10.

The stroke simulator 20 includes a piston 22 inserted into a second cylinder hole 21 formed in a portion of the base body 1A, a lid member 24 closing an opening of the second cylinder hole 21, and a coil spring 23 accommodated between the piston 22 and the lid member 24.

A pressure chamber 25 is formed between the bottom surface of the second cylinder hole 21 and the piston 22. The pressure chamber 25 communicates with the opening-side pressure chamber 14b of the first cylinder hole 11 via a first branch hydraulic passage 1c, a second branch hydraulic passage 1d, and a second main hydraulic passage 1b, which will be described later.

The reservoir communication passage 1e is connected to the back-pressure chamber 26 in which the coil spring 23 is disposed. The reservoir communication passage 1e communicates with the reservoir 15 (on the atmospheric-pressure side) via the master cylinder 10 and the feed port 15b.

In the stroke simulator 20, the piston 22 is moved against the biasing force of the coil spring 23 by the brake fluid pressure pressurized in the opening-side pressure chamber 14b. Then, the biased piston 22 applies a pseudo operation reaction force to the brake pedal BP.

The slave cylinder 30 includes two slave pistons 32a and 32b inserted into the third cylinder hole 31 formed in the base body 1A, and two pressure chambers 34a and 34b, that is, a bottom-side pressure chamber 34a and an opening-side pressure chamber 34b as slave cylinder pressure chambers. That is, the third cylinder hole 31 is partitioned into a bottom-side pressure chamber 34a and an opening-side pressure chamber 34b. The bottom-side pressure chamber 34a is formed between the bottom surface of the third cylinder hole 31 and the bottom-side slave piston 32a. The opening-side pressure chamber 34b is formed between the slave piston 32a on the bottom side and the slave piston 32b on the opening side. Both slave pistons 32a and 32b slide in the third cylinder hole 31 by receiving input from the rod 35a, and pressurize the brake fluid in the bottom side pressure chamber 34a and the opening side pressure chamber 34b.

The first slave cylinder supply passage 1h is connected to the bottom-side pressure chamber 34a. The first slave cylinder supply passage 1h is communicated with the reservoir 15 via the master cylinder 10 and the supply port 15a. Further, a first communication passage 3a communicating with the first main hydraulic passage 1a is connected to the bottom side pressure chamber 34a. The first communication passage 3a is provided with a first shut-off valve 8a as a shut-off valve.

The second slave cylinder supply passage 1i is connected to the opening-side pressure chamber 34b. The second slave cylinder supply passage 1i branches off from the reservoir communication passage 1e and communicates with the reservoir 15 through the reservoir communication passage 1e. Further, a second communication passage 3b communicating with the second main hydraulic passage 1b is connected to the opening-side pressure chamber 34b. The second communication passage 3b is provided with a second shut-off valve 8b as a shut-off valve and a second pressure sensor P2.

The slave cylinder 30 includes a drive transmission unit 35 and an electric motor 36. The electric motor 36 is an electric servo motor that is driven and controlled by the control device 4 described later. The drive transmission unit 35 is a mechanism that converts a rotational driving force of an output shaft of the electric motor 36 into an axial force in a linear direction. The drive transmission portion 35 is constituted by, for example, a ball screw mechanism. When the shaft of the electric motor 36 rotates and the rotational driving force is input to the drive transmission unit 35, the rod 35a of the drive transmission unit 35 moves forward and backward. The tip end portion of the rod 35a abuts against the slave piston 32b. The slave pistons 32a and 32b slide in the third cylinder hole 31 upon receiving an input from the rod 35a, and pressurize the brake fluid in the bottom-side pressure chamber 34a and the opening-side pressure chamber 34b.

The control device 4 includes, for example, a housing attached to a side surface of the base body 1B and a control board accommodated in the housing. The control device 4 controls the operation of the electric motor 36 and the opening and closing of each valve based on information obtained from the stroke sensor 16 and various sensors, a program stored in advance, and the like. The control device 4 is a dedicated control device of the hydraulic pressure generation device 1. The control device 4 executes an antilock brake control when the hydraulic pressure control device 2 is not operated (including a case where the hydraulic pressure control device 2 is not operated due to a failure) in addition to a normal brake control. In detail, the control device 4 executes the antilock brake control by controlling the operations of the first master cut valve 7a, the second master cut valve 7b, the first shut-off valve 8a, the second shut-off valve 8b, and the slave cylinders 30 according to the slip state of the wheels. In this case, the control device 4 can execute the antilock brake control for each of the first main hydraulic passage 1a and the second main hydraulic passage 1b.

The control device 4 has a function of performing fluid suction control. The fluid suction control is a control for securing the brake fluid in the slave cylinder 30. That is, the fluid suction control is a control for actively sucking the brake fluid into the bottom-side pressure chamber 34a and the opening-side pressure chamber 34b of the slave cylinder 30 through the first slave cylinder supply passage 1h and the second slave cylinder supply passage 1i. The fluid suction control is executed, for example, when the brake fluid is to be supplied to the slave cylinder 30, such as when the brake fluid is increased in pressure by the slave cylinder 30 during the antilock brake control by the hydraulic pressure control device 2. Further, the fluid suction control is also executed when the brake fluid is secured in advance for the subsequent pressurization in a state where the generated fluid pressure of the slave cylinder 30 becomes the required fluid pressure of the driver, for example. The control device 4 also performs the fluid suction control when the anti-lock brake control is executed by the hydraulic pressure generation device 1 during non-operation of the hydraulic pressure control device 2 (for example, during a failure of the hydraulic pressure control device 2).

Next, the respective hydraulic passages formed in the base body 1A will be described. In the base body 1A, a first main hydraulic passage 1a and a second main hydraulic passage 1b as main hydraulic passages communicating with the master cylinder 10, and a first branch hydraulic passage 1c branching from the second main hydraulic passage 1b are provided.

The first main hydraulic passage 1a is a hydraulic passage starting from the bottom side pressure chamber 14a of the first cylinder hole 11. The first main hydraulic passage 1a is provided with a first pressure sensor P1. The first pressure sensor P1 detects the brake fluid pressure generated in the master cylinder 10. A pipe Ha leading to a base body 1B of the hydraulic pressure control device 2 is connected to an outlet port which is an end point of the first main hydraulic passage 1a.

The second main hydraulic passage 1b is a hydraulic passage starting from the opening-side pressure chamber 14b of the first cylinder hole 11. A pipe Hb extending to a base body 1b of the hydraulic pressure control device 2 is connected to an outlet port which is an end point of the second main hydraulic passage 1b.

The first branch hydraulic passage 1c is a hydraulic passage extending from the second main hydraulic passage 1b to the pressure chamber 25 of the stroke simulator 20. The first branch hydraulic passage 1c is provided with a simulation valve 5. The simulation valve 5 is a normally closed electromagnetic valve for opening and closing the first branch passage 1c.

The second branch hydraulic passage 1d is a hydraulic passage extending from the second main hydraulic passage 1b to the first branch hydraulic passage 1c. The second branch hydraulic passage 1d is communicated with a portion of the first branch hydraulic passage 1c which is located on the pressure chamber 25 side relative to the simulation valve 5. A check valve 6 is provided in the second branch hydraulic passage 1d. The check valve 6 is connected in parallel to the simulator valve 5. The check valve 6 allows only the brake fluid to flow from the pressure chamber 25 side to the first cylinder hole 11 side.

The first main hydraulic passage 1a is provided with a first master cut valve 7a as a master cut valve. The first master cut valve 7a is an on-off valve formed of a normally-open electromagnetic valve, and open and close the first main hydraulic passage 1a. The second main hydraulic passage 1b is provided with a second master cut value 7b as a master cut value. The second master cut valve 7b is an on-off valve formed of a normally-open electromagnetic valve, and open and close the second main hydraulic passage 1b.

The first communication passage 3a is connected to the downstream side of the first master cut valve 7a in the first main hydraulic passage 1a. The first shut-off valve 8a of the first communication passage 3a is an on-off valve (on-off valve) formed of a normally closed electromagnetic valve that opens and closes the first communication passage 3a. The second communication passage 3b is connected to the second main hydraulic passage 1b on the downstream side of the second master cut valve 7b. The second shut-off valve 8b of the second communication passage 7b is an on-off valve (on-off valve) formed of a normally closed electromagnetic valve, and opens and closes the second communication passage 3b. The second pressure sensor P2 of the second communication passage 3b detects the brake fluid pressure generated in the slave cylinder 30. The information acquired by the first pressure sensor P1 and the second pressure sensor P2 is output to the control device 4.

When the first master cut valve7a is in the open state shown in FIG. 1 and the first shut-off valve 8a is in the closed state, the upstream side (the master cylinder 10 side) and the downstream side (the hydraulic pressure control device 2 side) of the first main hydraulic passage 1a communicate with each other, and the first main hydraulic passage 1a and the first communication passage 3a are shut off from each other. When the first master cut valve 7a is in the closed state shown in FIG. 1 and the first shut-off valve 8a is in the open state, the upstream side and the downstream side of the first main hydraulic passage 1a are shut off from each other, and the first communication passage 3a and the downstream side of the first main hydraulic passages 1a communicate with each other.

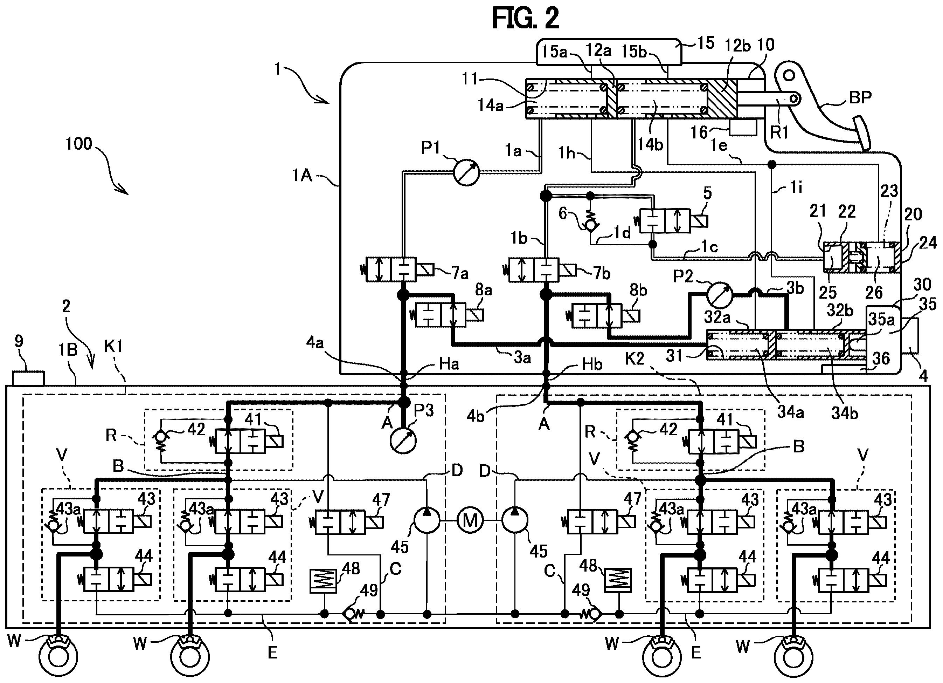

Similarly, when the second master cut valve 7b is in the open state shown in FIG. 1 and the second shut-off valve 8b is in the closed state, the upstream side (the master cylinder 10 side) and the downstream side (the hydraulic pressure control device 2 side) of the second main hydraulic passage 1b communicate with each other, and the second main hydraulic passage 1b and the second communication passage 3b are shut off from each other. When the second master cut valve 7b is in the closed state shown in FIG. 2 and the second shut-off valve 8b is in the open state, the upstream side and the downstream side of the second main hydraulic passage 1b are shut off from each other, and the second communication passage 3b and the downstream side of the second main hydraulic passage 1b communicate with each other.

The hydraulic pressure control device 2 can appropriately control the brake hydraulic pressure applied to each wheel cylinder W. As shown in FIG. 1, the hydraulic pressure control device 2 is disposed between the hydraulic pressure generation device 1 and each wheel cylinder W. The hydraulic control device 2 includes a brake output system K1 for braking two of the four wheel brakes and a brake output system K2 for braking the other two wheel brakes.

Two inlet ports 4a and 4b are provided in the side of the base body 1B of the hydraulic control device 2. Pipes Ha and Hb connected to the outlet port of the base body 1A of the hydraulic pressure generating device 1 are connected to the inlet ports 4a and 4b. The wheel cylinders W are connected to the outlet ports of the base body 1B of the hydraulic pressure control device 2 through pipes. The brake output system K1 is communicated with the first main hydraulic passage 1a, and the brake output system K2 is communicated with the second main hydraulic passage 1b.

The brake output system K1 includes a regulator R, a control valve unit V, a suction valve 47, a reservoir 48, a pump 45, and a third hydraulic pressure sensor P3. The hydraulic pressure control device 2 also includes a control device 9. Since the brake power system K2 has the same configuration as the brake power system K1, the brake power system K1 will be described in detail in the following description.

In the following description, a hydraulic passage from the inlet port 4a to the regulator R is referred to as an "output hydraulic passage A", and a hydraulic passage from the regulator R to the outlet port is referred to as a "wheel hydraulic passage B". Further, a hydraulic passage branching from the output hydraulic passage A and reaching the pump 45 is referred to as a "suction passage C", and a hydraulic passage from the pump 45 to the wheel hydraulic passage B is referred to as a "discharge passage D". Further, a hydraulic passage from the wheel hydraulic passage B to the suction passage C is referred to as an "open passage E". Further, an "upstream side" means the master cylinder 10 side, and an "downstream side" means the wheel brake (wheel cylinder W) side.

The regulator R is capable of adjusting a brake fluid pressure difference between the output hydraulic passage A side and the wheel hydraulic passage B side, and has a function of switching between a state of allowing the flow of the brake fluid and a state of blocking the flow of the brake fluid. The regulator R has a function of adjusting the brake fluid pressure in the wheel hydraulic passage B to a predetermined fluid pressure when the flow of the brake fluid in the output hydraulic passage A is blocked. The regulator R includes a cut valve 41 and a check valve 42.

The cut valve 41 is a normally open linear solenoid valve interposed between the output hydraulic passage A and the wheel hydraulic passage B. The cut valve 41 switches between a state of allowing the flow of the brake fluid from the output hydraulic passage A to the wheel hydraulic passage B and a state of blocking the flow of the brake fluid. That is, the cut valve 41 is configured to be able to adjust its valve opening pressure by controlling the energization of the solenoid (configured to also have a function as a relief valve).

The cut valve 41 releases the brake fluid in the wheel hydraulic passage B to the output hydraulic passage A side to adjust the brake fluid pressure when the brake fluid pressure of the wheel hydraulic passage B exceeds the brake fluid pressure of the output hydraulic passage A and the fluid pressure difference between the brake fluid pressure of the output hydraulic passage A and the brake fluid pressure of the wheel hydraulic passage B exceeds the force to close the cut valve 41 controlled by the energization of the solenoid.

The check valve 42 is connected in parallel with the cut valve 41. The check valve 42 is a one way valve that allows the brake fluid to flow from the output hydraulic passage A to the wheel hydraulic passage B. The check valve 42 is integrally provided in a normally open solenoid valve constituting the regulator R.

The control valve unit V switches between communication and shutoff of a hydraulic passage leading from the wheel hydraulic passage B to the wheel brake (wheel cylinder W) and communication and shutoff of a hydraulic passage leading from the wheel brake to the open passage E. The brake fluid pressure acting on each wheel cylinder W is increased, held or reduced by the control valve unit V. Therefore, the control valve unit V is configured to include the inlet valve 43, the outlet valve 44, and the check valve 43a.

The inlet valve 43, the outlet valve 44, and the check valve 43a are disposed in two hydraulic passages leading to the wheel cylinders W of the two wheel brakes, respectively. The inlet valve 43 is a normally open linear solenoid valve, and a differential pressure between upstream and downstream of the inlet valve 43 (a valve opening pressure of the inlet valve 43) can be adjusted according to a value of a drive current flowing through a coil of the inlet valve 43. The inlet valve 43 is normally open to allow the hydraulic pressure to be applied from the slave cylinder 30 to the wheel cylinder W. When the wheel is about to be locked, the inlet valve 43 is closed under the control of the control device 9 to block (hold) the brake fluid pressure applied to the wheel cylinder W.

The outlet valve 44 is a normally closed solenoid valve disposed between the wheel cylinder W and the open passage E. The outlet valve 44 is normally closed, but is opened under the control of the control device 9 when the wheel is about to lock. When the outlet valve 44 is opened, the brake fluid acting on the wheel cylinder W is released to the release passage E, and the brake fluid acting on the wheel cylinder W is decompressed.

The check valve 43a is connected in parallel to the inlet valves 43. The check valve 43a allows only the brake fluid to flow from the wheel cylinder W side to the slave cylinder 30 side (master cylinder 10 side). Therefore, even when the inlet valves 43 are closed, the check valves 43a allow the brake fluid to flow from the wheel cylinder W to the slave cylinder 30.

The suction valve 47 is a normally closed solenoid valve provided in the suction passage C and switches between a state in which the suction passage C is opened and a state in which the suction passage C is blocked. The suction valve 47 has an electromagnetic coil for driving the valve body thereof electrically connected to the control device 9, and opens when the electromagnetic coil is excited and closes when the electromagnetic coil is demagnetized based on a command from the control device 9.

The reservoir 48 is provided in the open passage E, and has a function of temporarily storing the brake fluid that is released by opening the outlet valve 44. A check valve 49 is provided between the reservoir 48 and the pump 45 to allow the brake fluid to flow only from the reservoir 48 to the pump 45.

The pump 45 has a suction side connected to the suction passage C (open passage E) and a discharge side connected to the discharge passage D. The pump 45 is driven by the motor M to suck the brake fluid in the reservoir 48 and discharge the pressurized brake fluid to the wheel hydraulic passage B through the discharge passage D. When the cut valve 41 of the regulator R is in a closed state and the suction valve 47 is in an open state, the pump 45 discharges the brake fluid stored in the master cylinder 10, the output hydraulic passage A, and the suction line C to the discharge line D. The amount of brake fluid discharged by the pump 45 depends on the rotational speed of the motor M.

The control device 9 includes, for example, a housing attached to a side surface of the base body 1B and a control board accommodated in the housing. The control device 9 controls the operation of the pump 45 (motor M) and the opening and closing of each valve based on information obtained from various sensors, a program stored in advance, and the like.

Next, the operation of the vehicle brake system 100 will be described with reference to FIGS. 2 to 8. In the vehicle brake system 100 shown in FIG. 1, when the system is started, the simulation valve 5 of the first branch hydraulic passage 1c of the hydraulic pressure generating device 1 is opened. The first and second master cut valves 7a and 7b of the hydraulic pressure generating device 1 are energized and actuated to be closed when the brake pedal BP is depressed. When the system is started, the first master cut valve 7a and the second master cut valve 7b of the hydraulic pressure generating device 1 may be excited and operated to be closed. The first shut-off valve 8a and the second shut-off valve 8b are energized and operated to be opened when the system is started.

As a result, the downstream side of the first main hydraulic passage 1a and the first communication passage 3a communicate with each other, and the downstream side of the second main hydraulic passage 1b and the second communication passage 3b communicate with each other. As a result, the master cylinder 10 and each wheel cylinder W are disconnected from each other, and the slave cylinder 30 and each wheel cylinder W are communicated with each other.

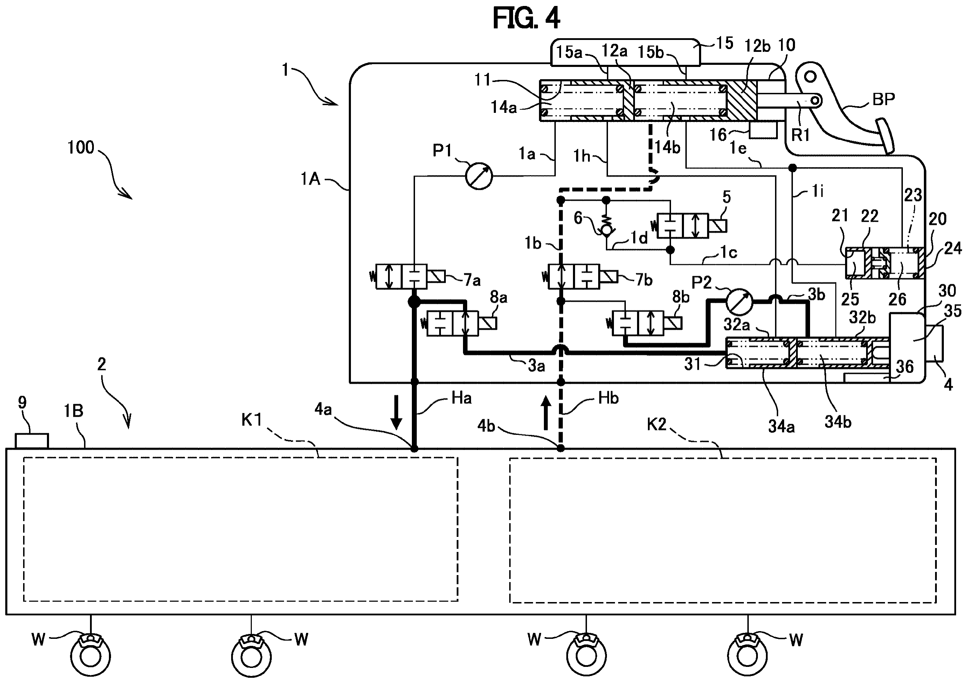

In the following description, a thick double line with a white outline shown in the drawing of the hydraulic circuit indicates a hydraulic passage on which the brake hydraulic pressure generated in the master cylinder 10 acts, and a thick solid line indicates a hydraulic passage on which the brake hydraulic pressure generated in the slave cylinder 30 acts. Further, a thick broken line indicates a hydraulic passage of the brake fluid released from the wheel cylinder W at the time of pressure reduction in the antilock brake control, and a thick broken line with a small interval indicates a flow passage in which the brake fluid pressure is held at the time of holding the antilock brake control. In FIGS. 4 to 11, hydraulic passages in the hydraulic pressure control device 2 is omitted. In FIGS. 4 to 11, the brake hydraulic pressure acts on flow passages corresponding to the hydraulic passages indicated by the thick solid line in FIG. 2.

### (Normal Brake Control)

FIG. 2 is a view showing a flow of the brake fluid during normal brake control. In a normal brake control in which there is no possibility of locking of the wheels, when the brake pedal BP is depressed, the amount of depression is detected by the stroke sensor 16, and the electric motor 36 of the slave cylinder 30 is driven by the control device 4. As a result, a brake fluid pressure is generated in the slave cylinder 30.

The brake fluid pressure generated in the master cylinder 10 by the operation of the brake pedal BP is not transmitted to the wheel cylinders W but is transmitted to the stroke simulator 20 through the second main hydraulic passage 1b and the first branch hydraulic passage 1c. Then, the brake fluid pressure in the pressure chamber 25 of the stroke simulator 20 increases, and the piston 22 moves against the biasing force of the coil spring 23, thereby allowing the stroke of the brake pedal BP. As a result, a pseudo operation reaction force is applied to the brake pedal BP.

The control device 4 compares the brake fluid pressure generated in the slave cylinder 30 (the fluid pressure detected by the second pressure sensor P2) with the required fluid pressure corresponding to the operation amount of the brake pedal BP (the fluid pressure detected by the first pressure sensor P1). The control device 4 controls the rotation speed, the driving time, and the like of the electric motor 36 based on the comparison result. In this way, the brake fluid pressure corresponding to the operation amount of the brake pedal BP is generated in the slave cylinder 30. The brake hydraulic pressure increased by the slave cylinder 30 is input to the hydraulic pressure control device 2 through the first communication passage 3a, the second communication passage 3b, the first main hydraulic passage 1a, and the second main hydraulic passage 1b.

The brake fluid pressure inputted to the fluid pressure control device 2 is transmitted to the wheel hydraulic passage B through the regulator R of the output hydraulic passage A, and is transmitted to the wheel cylinder W through the inlet valve 43 as it is. As a result, the wheels (not shown) are braked.

The control device 4 compares the brake fluid pressure generated in the slave cylinder 30 (the fluid pressure detected by the second pressure sensor P2) with the required fluid pressure corresponding to the operation amount of the brake pedal BP (the fluid pressure detected by the first pressure sensor P1). When the comparison result indicates that the brake fluid pressure is required to be increased to a high fluid pressure region such as in the case of sudden braking, the control device 4 instructs the control device 9 to drive the pump 45, thereby performing the auxiliary pressurization control so that the brake fluid pressure in the wheel hydraulic passage B is increased. In this case, the drive current of the regulator R and the motor M can be set as appropriate based on the required hydraulic pressure corresponding to the operation amount of the brake pedal BP.

When the brake pedal BP is released, the control device 4 drives the electric motor 36 of the slave cylinder 30 in the reverse direction. As a result, the hydraulic pressure generated in the slave cylinder 30 is reduced, and the pressures in the bottom-side pressure chamber 34a and the opening-side pressure chamber 34b of the slave cylinder 30 are reduced. As a result, the brake fluid pressure transmitted to the wheel cylinder W is returned to the slave cylinder 30 through the wheel hydraulic passage B, the output hydraulic passage A, the first main hydraulic passage 1a, the second main hydraulic passage 1b, the first communication passage 3a, and the second communication passage 3b. By returning the brake fluid, the brake fluid is secured in advance for the subsequent pressurization.

### (Antilock Brake Control by Hydraulic Pressure Control Device)

The anti-lock brake control by the hydraulic pressure control device 2 is executed when the wheel is about to fall into a locked state, and is realized by appropriately selecting a state in which the brake hydraulic pressure acting on the wheel cylinder W is reduced, increased, or held constant. The control device 9 determines which of the pressure decreasing mode, the pressure increasing mode, and the pressure holding mode is selected based on the wheel speed obtained from a wheel speed sensor (not shown).

When the wheel is about to enter a locked state while the brake pedal BP is being depressed, that is, while the brake fluid pressure generated in the slave cylinder 30 is acting on the fluid pressure control device 2, the control device 9 starts the antilock brake control. When the pressure reduction mode is selected in the antilock brake control, the inlet valve 43 and the outlet valve 44 are excited by the control device 9. As a result, the inlet valve 43 is closed and the outlet valve 44 is opened. In this way, the brake fluid in the wheel hydraulic passage B communicating with the wheel cylinder W is released from the outlet valve 44 to the open passage E. As a result, the brake fluid pressure applied to the wheel cylinder W is reduced. The brake fluid released to the open passage E flows into the reservoir 48. The brake fluid flowing into the reservoir 48 is then sucked by the pump 45 and returned to the hydraulic pressure generating device 1 through the discharge passage D, the wheel hydraulic passage B, and the output hydraulic passage A.

When the pressure increasing mode is selected in the antilock brake control, the inlet valve 43 and the outlet valve 44 are demagnetized by the control device 9. As a result, the inlet valve 43 is opened and the outlet valve 44 is closed. As a result, the brake fluid pressure acting on the wheel cylinder W through the wheel hydraulic passage B is increased by the brake fluid pressure generated in the slave cylinder 30.

When the holding mode is selected in the antilock brake control, the inlet valve 43 is excited and the outlet valve 44 is demagnetized by the control device 9. As a result, the inlet valve 43 is closed and the outlet valve 44 is closed. In this way, the brake fluid is confined in the flow passage closed by the inlet valve 43, the outlet valve 44, and the wheel cylinder W. As a result, the brake fluid pressure is kept constant.

### (Automatic Brake Control)

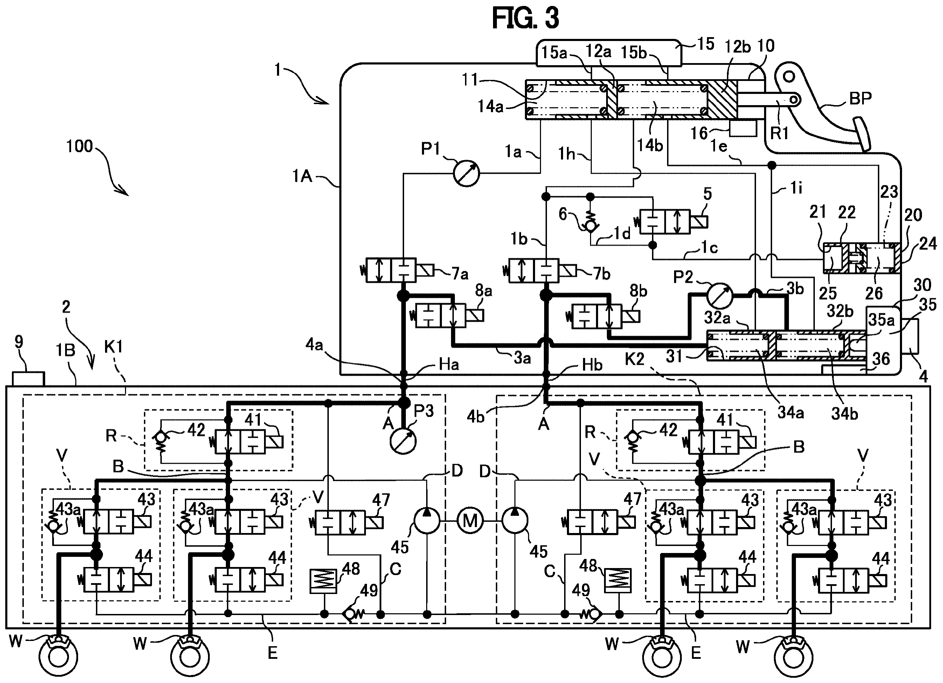

When the control device 4 determines that the wheels should be braked in a state where the driver does not depress the brake pedal BP, automatic brake control for assisting stabilization of the behavior of the vehicle is executed. In the automatic brake control, as shown in FIG. 3, the slave cylinder 30 is driven by the control device 4, the first shut-off valve 8a and the second shut-off valve 8b are opened, and the brake hydraulic pressure generated in the slave cylinder 30 is transmitted to the hydraulic pressure control device 2 side, as in the normal brake control.

In the hydraulic pressure control device 2, the regulator R is demagnetized and opened, the inlet valve 43 is demagnetized and opened, and the outlet valve 44 is demagnetized and closed by the control device 9. As a result, the brake fluid pressure generated in the slave cylinder 30 is transmitted from the output fluid pressure line A of the fluid pressure control device 2 to the wheel cylinder W through the wheel fluid pressure line B, and the wheel is braked.

The brake fluid pressure acting on the wheel cylinder W can be released from the outlet valve 44 to the open passage E by exciting the inlet valve 43 to be in a closed state and exciting the outlet valve 44 to be in an open state. In this case, the brake fluid released to the open passage E is temporarily stored in the reservoir 48, and then is sucked by the pump 45 and returned to the hydraulic pressure generating device 1 through the discharge passage D, the wheel hydraulic passage B, and the output hydraulic passage A.

When the wheels are about to be locked during the automatic brake control, the hydraulic pressure control device 2 performs the anti-lock brake control as in the above-described anti-lock brake control. The automatic brake control is also executed when the hydraulic pressure control device 2 is not operating, for example, when the hydraulic pressure control device 2 is in failure. The antilock brake control in the case where the automatic brake control is executed when the hydraulic pressure control device 2 is not operated will be described later.

### (Fluid Suction Control in Antilock Brake Control)

The fluid suction control is a control for sucking the brake fluid from the reservoir 15 in order to secure the brake fluid in the bottom-side pressure chamber 34a and the opening-side pressure chamber 34b of the slave cylinder 30. In the bottom-side pressure chamber 34a and the opening-side pressure chamber 34b, a necessary amount of brake fluid is secured during normal brake control (during brake control in which the first shut-off valve 8a and the second shut-off valve 8b are open) except for a case where special braking such as sudden braking is performed or antilock brake control is frequently continued.

The fluid suction control is performed, for example, when the control device 4 determines that the required fluid pressure corresponding to the operation amount of the brake pedal BP cannot be covered by the maximum stroke amount of the slave pistons 32a and 32b of the slave cylinder 30. Here, the maximum stroke amount can be set as, for example, a moving amount when the slave pistons 32a and 32b move from the initial positions to positions immediately before the slave pistons 32a and 32b come into contact with the bottom portion of the third cylinder hole 31 at the time of pressurizing.

When it is determined that the brake fluid required for the pressure increase cannot be covered by the maximum stroke amount of the slave pistons 32a and 32b, the control device 4 returns the slave pistons 32a and 32b once in the pressure reducing direction to perform re-pressurization. The return amount at that time can be calculated based on, for example, a map set in advance in the control device 4. In addition, when performing such re-pressurization, the control device 4 controls the first shut-off valve 8a and the second shut-off valve 8b to be in a closed state by being de-energized.

When the electric motor 36 is driven to rotate reversely in the decompression direction (return direction) by the control device 4, the slave pistons 32a and 32b are returned in the decompression direction, and the bottom-side pressure chamber 34a and the opening-side pressure chamber 34b are decompressed to be in a negative pressure state while the hydraulic pressure of the wheel cylinder W is kept in a holding state. As a result, the brake fluid is sucked from the reservoir 15 into the slave cylinder 30 through the first slave cylinder supply passage 1h and the second slave cylinder supply passage 1i. The amount of brake fluid sucked into the slave cylinder 30 is an amount corresponding to the return amount of the slave pistons 32a and 32b.

When the return amount of the slave pistons 32a and 32b reaches the target value, the control device 4 controls the first shut-off valve 8a and the second shut-off valve 8b to be in the open state. Then, the control device 4 drives the electric motor 36 to rotate forward again in the pressurizing direction. As a result, the brake fluid pressure to the wheel cylinder W is increased again to a brake fluid pressure corresponding to the required fluid pressure of the driver.

Thereafter, when the brake pedal BP is released, the control device 4 drives the electric motor 36 to rotate in the reverse direction, that is, in the pressure reducing direction (a returning direction). As a result, the brake fluid is sucked from the reservoir 15 into the slave cylinder 30 through the first slave cylinder supply passage 1h and the second slave cylinder supply passage 1i, and the fluid suction control is terminated.

### (Antilock Brake Control when Hydraulic Pressure Control Device is Not in Operation)

Next, a case where the automatic brake control is executed when the hydraulic pressure control device 2 is not operated (for example, when the hydraulic pressure control device 2 fails) will be described. When the wheel is about to be locked during the non-operation of the hydraulic pressure control device 2 and during the execution of the automatic brake control, the antilock brake control is executed by the control device 4.

In the antilock brake control during the non-operation of the hydraulic pressure control device 2 and the execution of the automatic brake control, when the control device 4 selects, for example, the pressure decreasing mode of the brake output system K2, as shown in FIG. 4, the second master cut valve 7b is brought into the non-excited state and opened, and the second shut-off valve 8b is brought into the non-excited state and closed by the control device 4.

In this way, the brake fluid acting on the wheel cylinder W of the brake output system K2 is released to the second main hydraulic passage 1b on the hydraulic pressure generating device 1 side through the wheel hydraulic passage B and the outputting hydraulic passage A of the hydraulic pressure control device 2. The brake fluid that has escaped to the second main hydraulic passage 1b flows into the master cylinder 10 through the second master cut valve 7b, and is returned to the reservoir 15. As a result, the brake fluid pressure applied to the wheel cylinders W of the brake output system K2 is reduced.

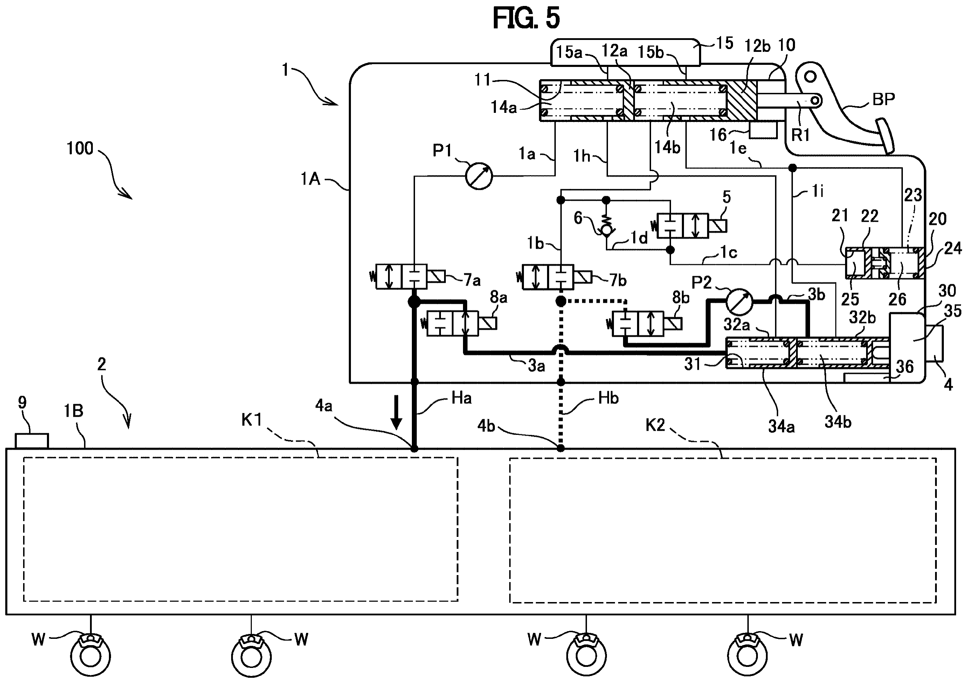

In the antilock brake control during the non-operation of the hydraulic pressure control device 2 and the execution of the automatic brake control, when the holding mode of the brake power system K2 is selected by the control device 4, for example, the second master cut valve 7b is brought into the excited state and closed and the second shut-off valve 8b is brought into the non-excited state and closed by the control device 4 as shown in FIG. 5.

In this way, the brake fluid is confined in the flow passage closed by the second master cut valve 7b, the second shut-off valve 8b, and the wheel cylinders W of the brake output system K2. As a result, the brake fluid pressure in the brake output system K2 is maintained constant.

In the antilock brake control during the non-operation of the hydraulic pressure control device 2 and the execution of the automatic brake control, when the control device 4 selects, for example, the pressure reducing mode of both the brake output systems K1 and K2, the control device 4 can reduce the brake hydraulic pressure by driving the slave cylinder 30. In this case, the control device 4 brings the first master cut valve 7a and the second master cut valve 7b into an excited state to close the valves, and brings the first shut-off valve 8a and the second shut-off valve 8b into an excited state to open the valves. Then, the electric motor 36 is driven to rotate in the reverse direction, i.e., the decompression direction (return direction), by the control device 4.

In this way, the brake fluid acting on the wheel cylinders W of the brake output systems K1 and K2 is returned to the bottom-side pressure chamber 34a and the opening-side pressure chamber 34b of the slave cylinder 30 through the first main hydraulic passage 1a, the second main hydraulic passage 1b, the first communication passage 3a, and the second communication passage 3b. As a result, the brake fluid pressure applied to the wheel cylinders W of the brake output systems K1 and K2 is reduced.

Such pressure reduction by driving the slave cylinder 30 can be executed also when the following pressure reduction mode and holding mode are selected. In particular, when the control device 4 selects the pressure decreasing mode for one of the brake power systems K1 and K2 and the pressure maintaining mode for the other system, the control device 4 can drive the slave cylinder 30 to decrease the pressure.

For example, when the control device 4 selects the pressure decreasing mode of the brake power system K1 and the pressure maintaining mode of the brake power system K2, the first master cut valve 7a and the second master cut valve 7b are energized and closed, the first shutoff valve 8a is energized and opened, and the second shutoff valve 8b is de-energized and closed. Then, the electric motor 36 is driven to rotate in the reverse direction, i.e., the decompression direction (return direction) by the control device 4.

In this way, the brake fluid acting on the wheel cylinder W of the brake output system K1 is returned to the bottom side pressure chamber 34a of the slave cylinder 30 through the first main hydraulic passage 1a and the first communication passage 3a. On the other hand, the brake fluid is confined in the flow passage closed by the second master cut valve 7b, the second shut-off valve 8b, and the wheel cylinders W of the brake output system K2. As a result, the brake fluid pressure applied to the wheel cylinders W of the brake output system K1 is reduced, and the brake fluid pressure of the brake output system K2 is maintained constant.

Next, the antilock brake control when the brake pedal BP is operated while the hydraulic pressure control device 2 is not operating will be described. The antilock brake control during the non-operation of the hydraulic control device 2 and the operation of the brake pedal BP is also executed by the control device 4 when the wheels are about to fall into the locked state, similarly to the antilock brake control described above. The first master cut valve 7a and the second master cut valve 7b are energized and closed by the control device 4.

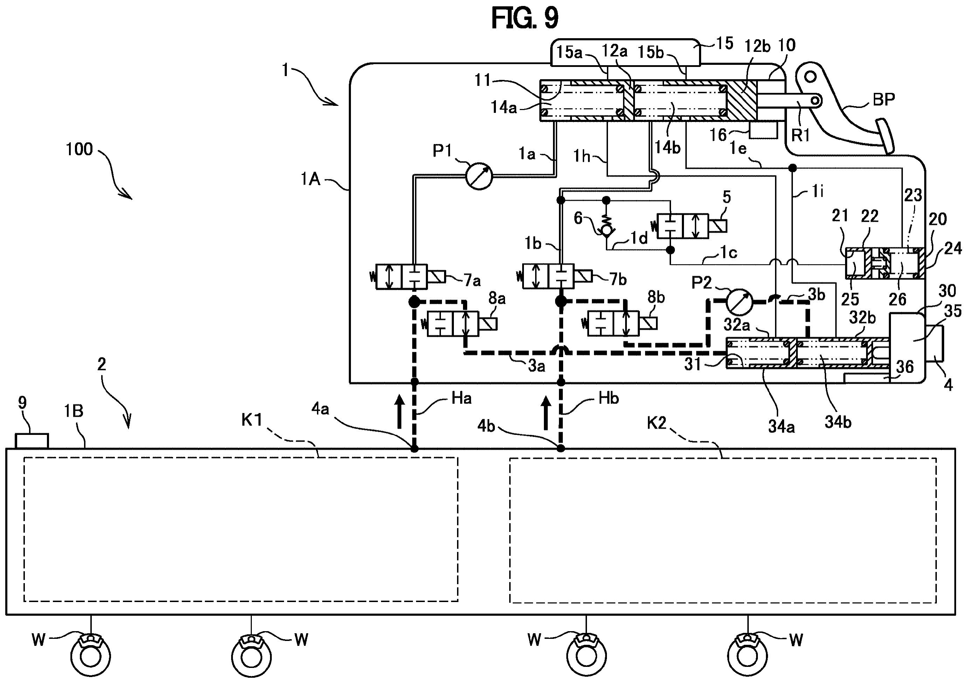

In the antilock brake control during the non-operation of the hydraulic pressure control device 2 and the operation of the brake pedal BP, when the control device 4 selects, for example, the pressure reducing mode of both the brake output systems K1 and K2, the first shut-off valve 8a and the second shut-off valve 8b are excited and opened by the control device 4 as shown in FIG. 9. Then, the electric motor 36 is driven by the control device 4 to rotate in the reverse direction, that is, in the decompression direction (return direction). Then, the brake fluid in the brake output system K1 is returned from the first main hydraulic passage 1a to the bottom-side pressure chamber 34a of the slave cylinder 30 through the first communication passage 3a, and the brake fluid in the brake output system K2 is returned from the second main hydraulic passage 1b to the opening-side pressure chamber 34b of the slave cylinder 30 through the second communication passage 3b.

Thus, in the state where the brake pedal BP is operated, the brake fluid pressures applied to the wheel cylinders W of the brake output systems K1 and K2 are reduced.

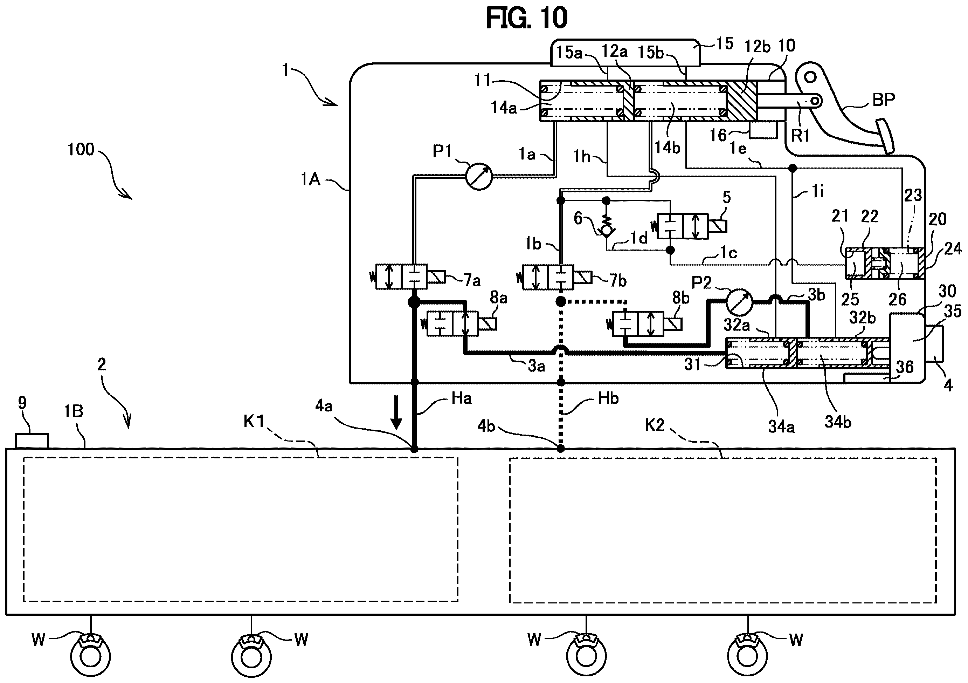

In the antilock brake control during the non-operation of the hydraulic pressure control device 2 and the operation of the brake pedal BP, when the holding mode of the brake output system K2 is selected by the control device 4, the second shut-off valve 8b is brought into the non-excited state and closed by the control device 4 as shown in FIG. 10.

In this way, the brake fluid is confined in the flow passage closed by the second master cut valve 7b, the second shut-off valve 8b, and the wheel cylinders W of the brake output system K2. As a result, the brake fluid pressure in the brake output system K2 is maintained constant.

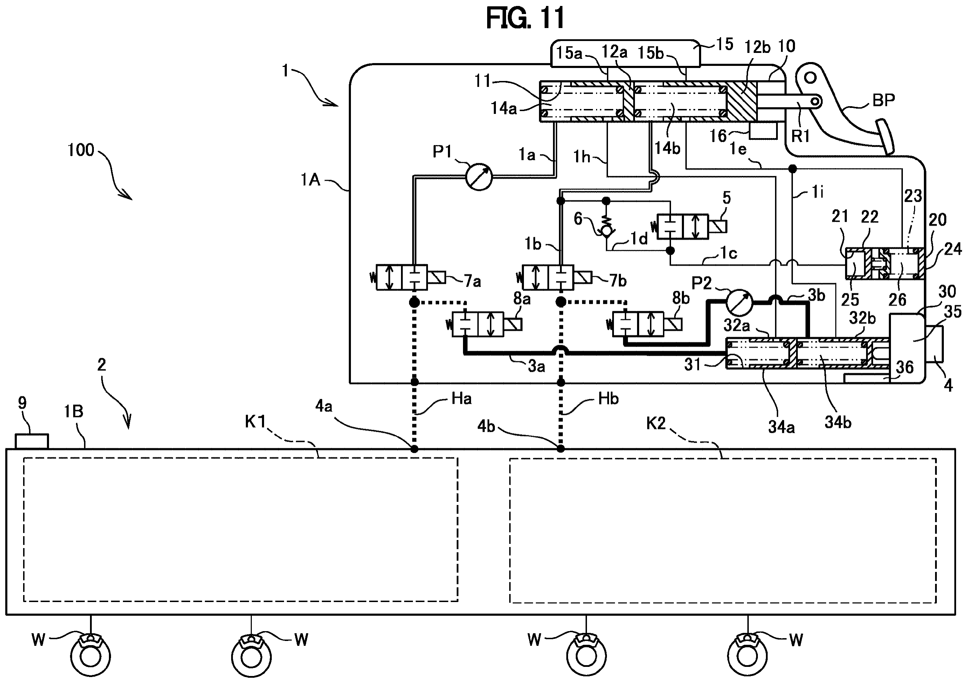

In the antilock brake control during the non-operation of the hydraulic pressure control device 2 and the operation of the brake pedal BP, when the holding mode of both the brake output systems K1 and K2 is selected by the control device 4, for example, the first shut-off valve 8a and the second shut-off valve 8b are brought into the non-excited state and closed by the control device 4 as shown in FIG. 11.

In this way, the brake fluid is confined in the flow passage closed by the first master cut valve 7a, the first shut-off valve 8a, and the wheel cylinders W of the brake output system K1, and the brake fluid is confined in the flow passage closed by the second master cut valve 7b, the second shut-off valve 8b, and the wheel cylinders W of the brake output system K2. As a result, the brake fluid pressures in the brake output systems K1 and K2 are maintained constant.

### (Fluid Suction Control when Fluid Pressure Control Device 2 is Not in Operation)

A case where the fluid suction control is performed in the antilock brake control during the non-operation of the hydraulic pressure control device 2 and during the execution of the automatic brake control will be described. The fluid suction control in this case is executed by the control device 4 in a mode in which both the first shut-off valve 8a and the second shut-off valve 8b are brought into a non-excited state and closed.

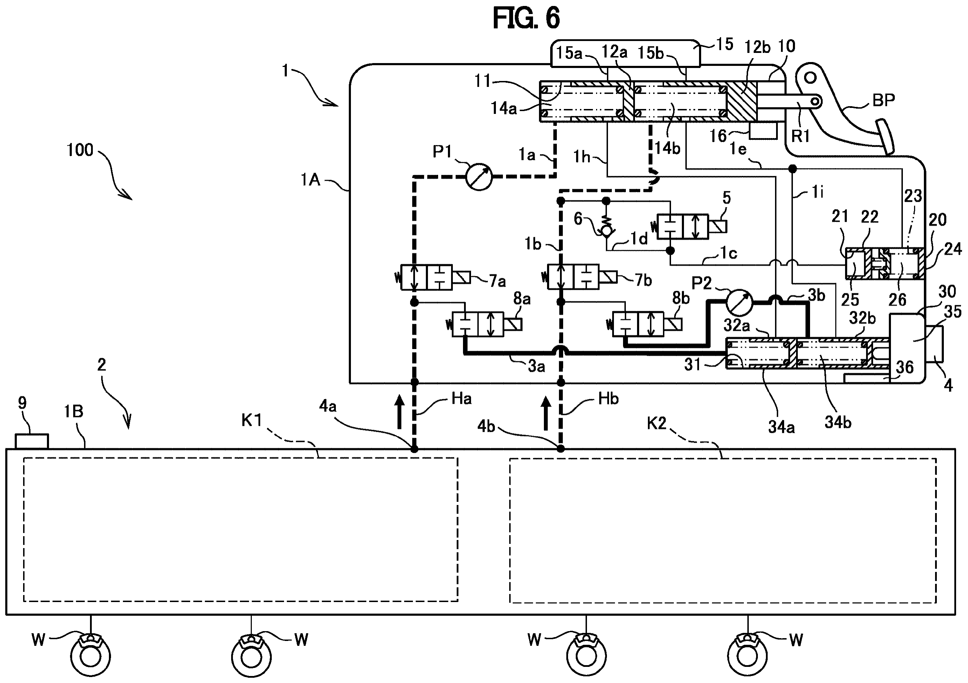

As a mode in which both the first shut-off valve 8a and the second shut-off valve 8b are set to the non-excited state, for example, as shown in FIG. 6, a mode in which both the brake power systems K1 and K2 are depressurized is exemplified. When the pressure reducing mode is selected for both the brake power systems K1 and K2, the control device 4 de-energizes the first and second master cut valve 7a and 7b to open the first and second master cut valves 7a and 7b, and de-energizes the first and second shut-off valves 8a and 8b to close the first and second shut-off valves 8a and 8b.

In this way, the brake fluid in the brake output systems K1 and K2 is released to the first main hydraulic passage 1a and the second main hydraulic passage 1b on the hydraulic pressure generating device 1 side through the wheel hydraulic passage B and the outputting hydraulic passage A of the hydraulic pressure control device 2, respectively. The brake fluid that has escaped to the first main hydraulic passage 1a and the second main hydraulic passage 1b passes through the first master cut valve 7a and the second master cut valve 7b, flows into the master cylinder 10, and is returned to the reservoir 15.

On the other hand, the electric motor 36 is driven to rotate reversely in the pressure reducing direction (return direction) by the control device 4, and the slave pistons 32a and 32b are temporarily returned in the pressure reducing direction. As a result, the pressure in the bottom-side pressure chamber 34a and the opening-side pressure chamber 34b is reduced to a negative pressure, and the brake fluid is sucked from the reservoir 15 into the slave cylinder 30 through the first slave cylinder supply passage 1h and the second slave cylinder supply passage 1i. The amount of brake fluid absorbed into the slave cylinder 30 corresponds to the return amount of the slave pistons 32a and 32b.

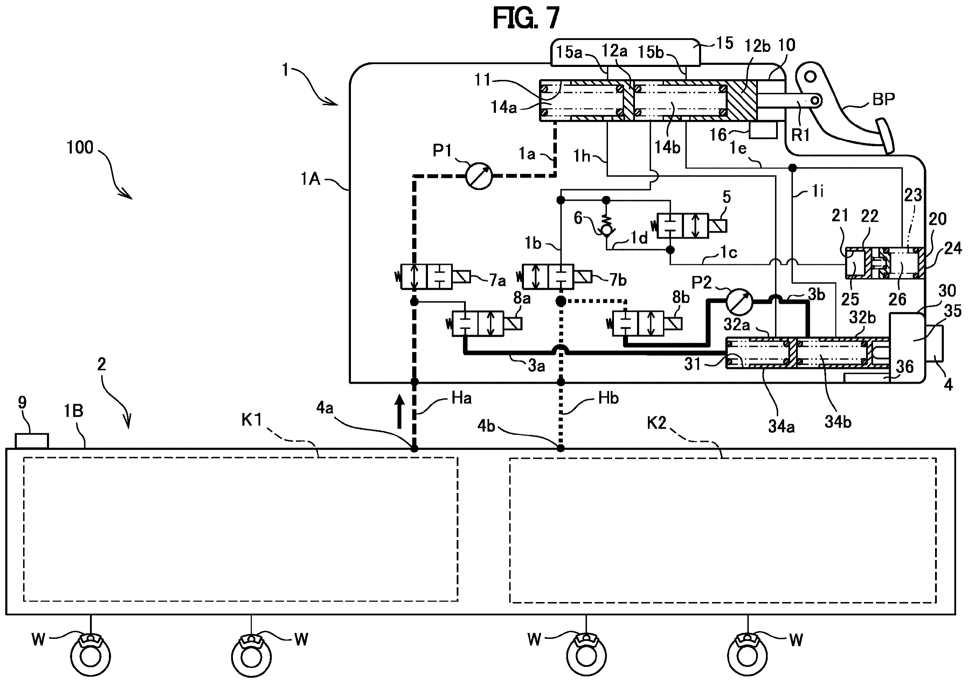

In addition, as another mode in which both the first shut-off valve 8a and the second shut-off valve 8b are set to the non-excited state, for example, as shown in FIG. 7, a case where the pressure decreasing mode of the brake power system K1 is selected and the holding mode of the brake power system K2 is selected is exemplified. When the brake-output system K1 is set to the pressure reduction mode, the control device 4 sets the first master cut valve 7a to the non-excited state to open the first master cut valve 8a, and sets the first shutoff valve 8a to the non-excited state to close the first shutoff valves 8a. When the holding mode of the brake power system K2 is selected, the control device 4 causes the second master cut valve 7b to be in an excited state and closed, and causes the second shutoff valve 8b to be in a non-excited state and closed.

In this way, the brake fluid acting on the wheel cylinder W of the brake output system K1 is released to the first main hydraulic passage 1a on the hydraulic pressure generating device 1 side through the wheel hydraulic passage B and the outputting hydraulic passage A of the hydraulic pressure control device 2 in the same manner as described above, and flows into the master cylinder 10 through the first master cut valve 7a to be returned to the reservoir 15. Further, the brake fluid is confined in the flow passage closed by the second master cut valve 7b, the second shut-off valve 8b, and the wheel cylinders W of the brake output system K2. As a result, the brake fluid pressure in the brake output system K2 is maintained constant.

In this state, the electric motor 36 is driven to rotate in the reverse direction in the decompression direction (return direction) by the control device 4, and the pressure in the bottom-side pressure chamber 34a and the opening-side pressure chamber 34b is reduced to be in a negative pressure state. As a result, the brake fluid is sucked from the reservoir 15 into the slave cylinder 30 through the first slave cylinder supply passage 1h and the second slave cylinder supply passage 1i.

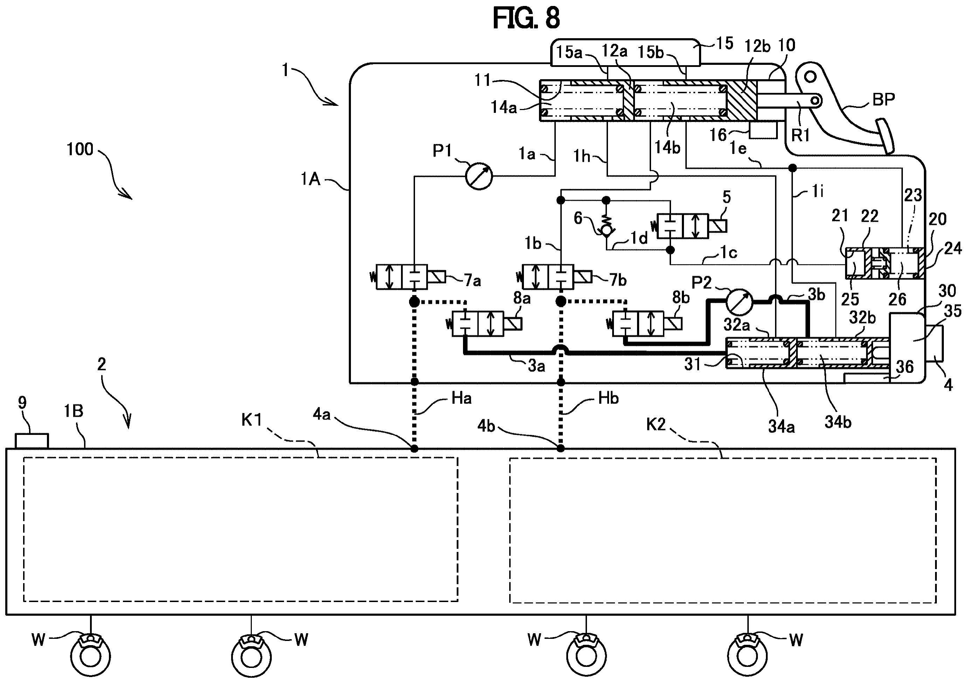

In addition, as another mode in which both the first shut-off valve 8a and the second shut-off valve 8b are set to the non-excited state, for example, as shown in FIG. 8, a case where both the brake output systems K1 and K2 are set to the holding mode is exemplified. When both the brake power systems K1 and K2 are set to the holding mode, the control device 4 sets the first and second master cut valves 7a and 7b to the non-excited state to open the first and second master cut valves 7a and 7b, and sets the first and second shutoff valves 8a and 8b to the non-excited state to close the first and second shutoff valves 8a and 8b.

In this state, the electric motor 36 is driven to rotate reversely in the pressure reducing direction (return direction) by the control device 4 in the same manner as described above, and the brake fluid is sucked into the bottom-side pressure chamber 34a and the opening-side pressure chamber 34b which are in the negative pressure state.

According to the vehicular brake system 100 of the present embodiment described above, even when the hydraulic pressure control device 2 is not operated, the anti-lock brake control can be executed by controlling the slave cylinder 30, the first master cut valve 7a, the second master cut valve 7b, the first shut-off valve 8a, and the second shut-off valve 8b of the hydraulic pressure generation device 1 by the control device 4. Therefore, for example, even when the hydraulic pressure control device 2 fails, the control device 4 can execute the antilock brake control so that the wheels are not locked based on the slip state of the wheels.

The first master cut valve 7a and the second master cut valve 7b are normally open on-off valves, and the first shut-off valve 8a and the second shut-off valve 8b are normally closed on-off valves. Therefore, with such a simple system configuration, the vehicle can execute the antilock brake control even when the hydraulic pressure control device 2 is not operated, and thus the cost can be reduced.

Further, when the hydraulic pressure control device 2 is not operated, the brake hydraulic pressure generated in the bottom-side pressure chamber 34a and the opening-side pressure chamber 34b of the slave cylinder 30 is transmitted to the respective wheel brakes via the first main hydraulic passage 1a and the second main hydraulic passage 1b, so that the anti-lock brake control can be suitably realized in the vehicle.

In the antilock brake control during the non-operation of the hydraulic pressure control device 2 and during the automatic brake control, the control device 4 controls the first master cut valve 7a, the second master cut valve 7b, the first shut-off valve 8a, the second shut-off valve 8b, and the slave cylinder 30 so that the hydraulic passages to be reduced in pressure can be suitably reduced in pressure, the hydraulic passages to be increased in pressure can be suitably increased in pressure, and the hydraulic passages to be maintained in pressure can be suitably maintained in pressure.

In the antilock brake control when the hydraulic pressure control device 2 is not operated, the control device 4 opens the first master cut valve 7a and the second master cut valve 7b of the hydraulic passages to be reduced in pressure and closes the first shutoff valve 8a and the second shutoff valve 8b of the hydraulic passages to be reduced in pressure, so that the brake fluid can be returned to the master cylinder 10 side through the opened first master cut valve 7a and the opened second master cut valve 7b. Thus, the vehicle can suitably reduce the pressure in the hydraulic passage to be reduced in pressure.

The first main hydraulic passage 1a is connected to the wheel brake of the front wheel, and the second main hydraulic passage 1b is connected to the wheel brake of the rear wheel. Thus, when the hydraulic pressure control device 2 is not operated, the vehicle can separately control the front wheels and the rear wheels by the antilock brake. That is, the braking force distribution between the front and rear of the vehicle corresponding to the vehicle type can be suitably realized.

### Second Embodiment

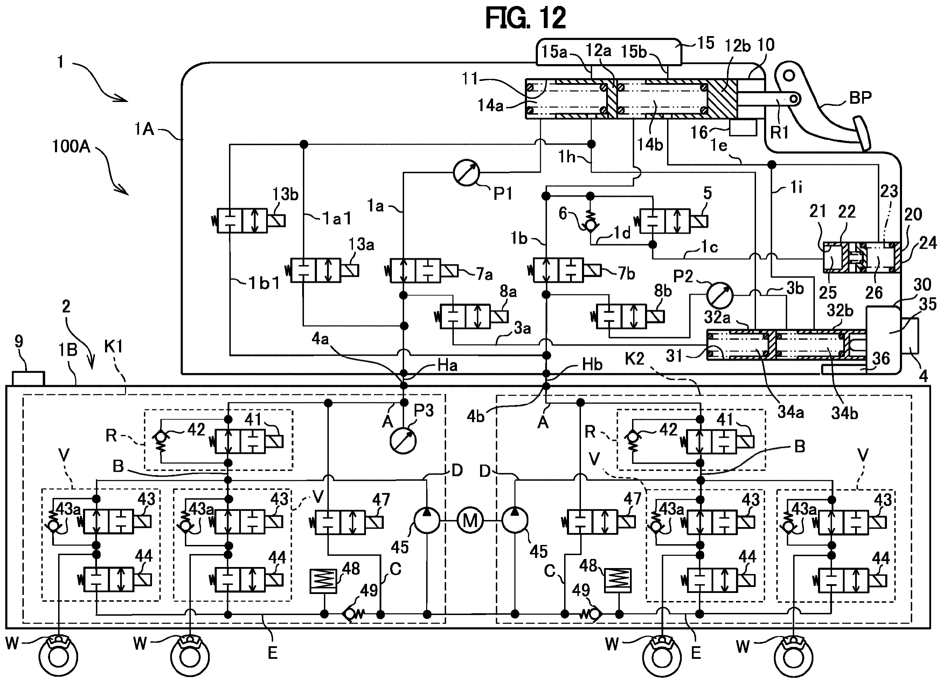

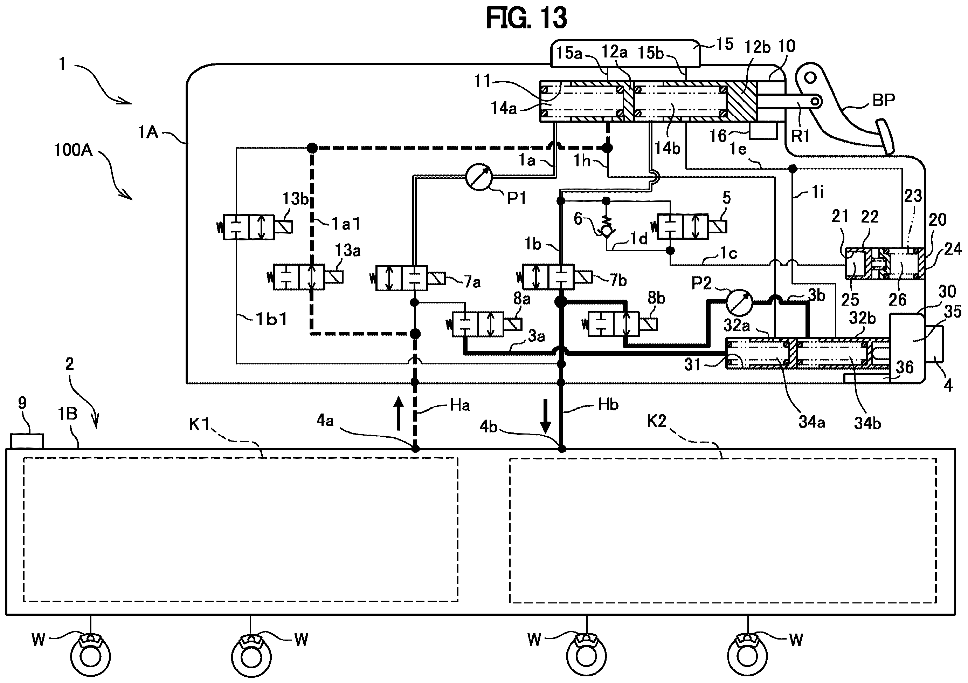

Next, a vehicle brake system according to a second embodiment will be described with reference to FIGS. 12 and 13. The present embodiment is different from the first embodiment in that a designer provides a first return channel 1a1 communicating with the first main hydraulic channel 1a and a second return channel 1b1 communicating with the second main hydraulic channel 1b.

The first return channel 1a1 branches off from the first main hydraulic channel 1a on the downstream side of the first master cut valve 7a, and reaches the first slave cylinder supply channel 1h. The designer provides the first on-off valve 13a in the middle of the first return flow passage 1a1. The first on-off valve 13a is an on-off valve formed of a normally-closed electromagnetic valve.

The second return channel 1b1 branches from the second main hydraulic channel 1b on the downstream side of the second master cut valves 7b, and reaches the first return channel 1a1. The designer provides the second on-off valve 13b in the middle of the second return flow passage 1b1. The second on-off valves 13b is an on-off valve (on-off valve) formed of a normally-closed electromagnetic valve.

The first on-off valve 13a and the second on-off valve 13b are opened and closed by being controlled by the control device 4. In detail, the control device 4 opens the first on-off valve 13a and the second on-off valve 13b when the pressure decreasing mode is selected in the antilock brake control in which the hydraulic pressure control device 2 is not operated and the brake pedal BP is operated.

The first on-off valve 13a is opened by the control device 4 in the pressure reducing mode of the antilock brake control of the brake output system K1. The second on-off valve 13b is opened by the control device 4 in the pressure reducing mode of the antilock brake control of the brake power system K2.

Next, the antilock brake control when the hydraulic pressure control device 2 is not operating and the brake pedal BP is being operated will be described. In the present embodiment, the brake fluid can be returned to the reservoir 15 through the first return channel 1a1 and the second return channel 1b1.

In the antilock brake control during the non-operation of the hydraulic pressure control device 2 and the operation of the brake pedal BP, for example, when the control device 4 selects a mode for reducing the pressure of the brake output system K1, as shown in FIG. 13, the control device 4 brings the first shut-off valve 8a into a non-excited state to close the first shut-off valve 8a, and brings the first on-off valve 13a into an excited state to open the first on-off valve 13a.

In this way, the brake fluid acting on the wheel cylinder W of the brake output system K1 is released from the first main hydraulic passage 1a to the first return flow passage 1a1, and further flows into the master cylinder 10 through the first slave cylinder supply passage 1h, and is returned to the reservoir 15.

As a result, the brake fluid pressure applied to the wheel cylinders W of the brake output system K1 in the vehicle is reduced in a state where the brake pedal BP is operated.

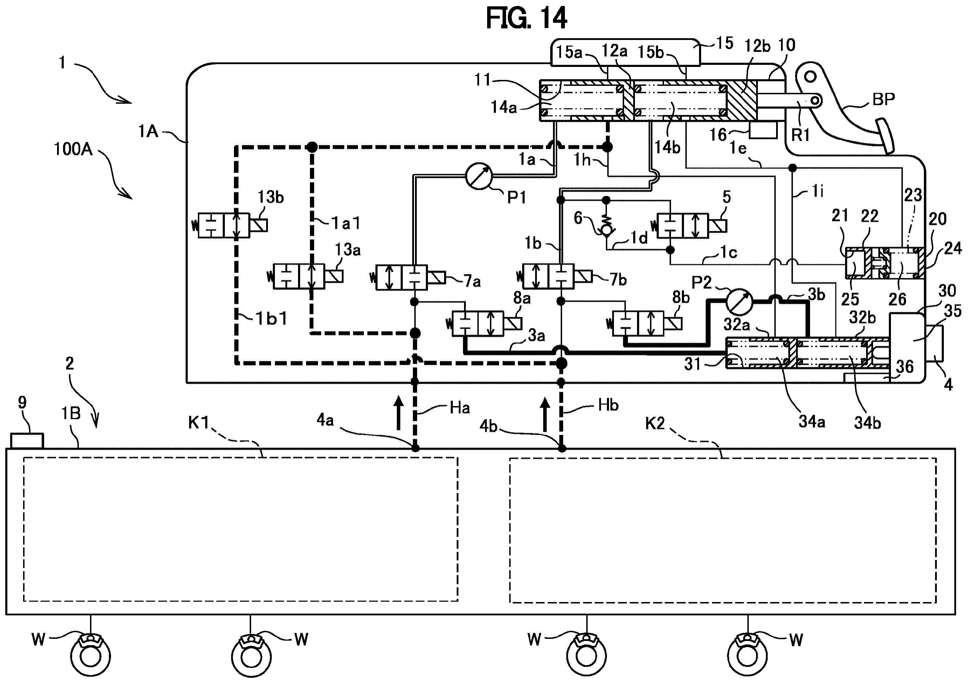

In the antilock brake control during the non-operation of the hydraulic pressure control device 2 and the operation of the brake pedal BP, for example, when the control device 4 selects a mode for reducing the pressures of the brake output systems K1 and K2, the control device 4 brings the first shut-off valve 8a and the second shut-off valve 8b into the non-excited state to close the valves, and brings the first on-off valve 13a and the second on-off valve 13b into the excited state to open the valves, as shown in FIG. 14.

In this way, the brake fluid acting on the wheel cylinder W of the brake output system K1 is released from the first main hydraulic passage 1a to the first return flow passage 1a1, and further flows into the master cylinder 10 through the first slave cylinder supply passage 1h, and is returned to the reservoir 15. On the other hand, the brake fluid acting on the wheel cylinder W of the brake output system K2 is released from the second main hydraulic passage 1b to the second return flow passage 1b1, and further flows from the first return flow passage 1a1 into the master cylinder 10 through the first slave cylinder supply passage 1h, and is returned to the reservoir 15.

As a result, even when the brake pedal BP is being operated, the brake fluid pressures applied to the wheel cylinders W of the brake output systems K1 and K2 are reduced.

According to the vehicular brake system 100A of the present embodiment described above, the same operational effects as those described in the first embodiment can be obtained in the vehicle. In addition, in the vehicle brake system 100A of the present embodiment, in the antilock brake control when the hydraulic pressure control device 2 is not operated, the hydraulic passage to be depressurized can be suitably depressurized by returning the brake fluid to the master cylinder 10 side through the first return flow passage 1a1 or the second return flow passage 1b1. That is, even when the brake fluid pressure generated in the master cylinder 10 by the operation of the brake pedal BP is applied to the first main hydraulic passage 1a and the second main hydraulic passage 1b, the brake fluid can be returned to the master cylinder 10 side through the first return flow passage 1a1 and the second return flow passage 1b1.

In the present embodiment, the designer connects the terminal end of the first return channel 1a1 to the first slave cylinder supply channel 1h, but the present invention is not limited thereto, and the terminal end of the first return channel 1e may be connected to the reservoir communication channel LA. Alternatively, the fuel may be returned directly to the reservoir 15.

Although the embodiment of the present invention has been described above, the present invention is not limited to the above embodiment, and a designer can appropriately change the embodiment without departing from the spirit of the present invention. For example, in the first and second embodiments, the designer has shown the master cylinder 10 having two pressure chambers, the bottom-side pressure chamber 14a and the opening-side pressure chamber 14b, but the present invention is not limited thereto, and the master cylinder 10 may be configured to include one pressure chamber and to branch off from the pressure chamber to the first main hydraulic passage 1a and the second main hydraulic passage 1b through a common hydraulic passage.

In the first and second embodiments, the designer has shown the slave cylinder 30 having two pressure chambers, i.e., the bottom-side pressure chamber 34a and the opening-side pressure chamber 34b, but the present invention is not limited thereto, and the slave cylinder 30 may have a configuration in which one slave cylinder pressure chamber is provided and the slave cylinder pressure chamber is branched into the first communication passage 3a and the second communication passage 3b through a common hydraulic passage.

In the first embodiment, the designer has shown the hydraulic pressure generating device 1 and the hydraulic pressure control device 2 configured by the two base bodies 1A and 1B, but the present invention is not limited thereto, and the hydraulic pressure generating device 1 may be configured by dividing the base body 1A into two base bodies. Further, the hydraulic pressure generating device 1 and the hydraulic pressure control device 2 may be integrated into one base body.

In the first and second embodiments, the designer has shown the two control devices 4 and 9, but the present invention is not limited to this, and the hydraulic pressure generating device 1 and the hydraulic pressure control device 2 may be controlled by one control device.

### [Description of Reference]

1 Hydraulic pressure generating device
1a First main hydraulic passage (main hydraulic passage)
1b Second main hydraulic passage (main hydraulic passage)
1a1 First return flow passage (return flow passage)
1b1 Second return flow passage (return flow passage)
2 Hydraulic pressure control device
3a First communication passage (communication passage)
3b Second communication passage (communication passage)
4, 9 Control device
7a First master cut valve (master cut valve)
7b Second master cut valves (master cut valves)
8a First shut-off valve (shut-off valve)
8b Second shut-off valve (shut-off valve)
10 Master cylinder
14a Bottom side pressure chamber (pressure chamber)
14b Opening side pressure chamber (pressure chamber)
30 Slave cylinder
34a Bottom side pressure chamber (slave cylinder pressure chamber)
34b Opening side pressure chamber (slave cylinder pressure chamber)
36 Electric motor (electric actuator)
100, 100A Vehicular brake system
BP brake pedal (brake operator)

## Claims

1. A vehicle brake system comprising:
a hydraulic pressure generating device including a master cylinder that generates a brake hydraulic pressure in accordance with an operation amount of a brake operator and a slave cylinder that generates a brake hydraulic pressure by driving an electric actuator; and
a hydraulic pressure control device that controls a brake hydraulic pressure acting on a wheel brake by a brake hydraulic pressure from the hydraulic pressure generation device, wherein
the hydraulic pressure generation device includes: a master cut valve that opens and closes a main hydraulic passage leading from the master cylinder to the hydraulic pressure control device, a communication passage leading from the slave cylinder to the main hydraulic passage on a downstream side of the master cut valve, a shut-off valve that opens and closes the communication passage, and a control device that controls operations of the slave cylinder, the master cut valve, and the shut-off valve, wherein
the main hydraulic passage includes a first main hydraulic passage communicating with at least one of a plurality of wheel brakes and a second main hydraulic passage communicating with remaining wheel brakes, wherein
the master cut valve, the communication passage, and the shut-off valve are provided in each of the first main hydraulic passage and the second main hydraulic passage, wherein
the control device controls, when the hydraulic pressure control device is not operated, the slave cylinder to generate a brake hydraulic pressure, and performs antilock brake control by controlling the master cut valve and the shut-off valve for each of the first main hydraulic passage and the second main hydraulic passage based on a slip state of wheels.

2. The vehicle brake system according to claim 1, wherein the master cut valve is a normally open type on-off valve, and the shut-off valve is a normally closed type on-off valve.

3. The vehicle brake system according to claim 1, wherein the master cylinder includes two pressure chambers and the vehicle brake system is configured to output hydraulic pressures generated in the two pressure chambers to the first main hydraulic passage and the second main hydraulic passage, respectively, wherein the slave cylinder includes two slave cylinder pressure chambers and the vehicle brake system is configured to output hydraulic pressures generated in the two slave cylinder pressure chambers to the first main hydraulic passage and the second main hydraulic passage, respectively.

4. The vehicle brake system according to claim 1, wherein when the brake hydraulic pressure of at least one of the first main hydraulic passage and the second main hydraulic passage is increased during the antilock brake control, the control device closes the master cut valve of the hydraulic passage to be increased in pressure and opens the shut-off valve of the hydraulic passage to be increased in pressure, and applies the brake hydraulic pressure generated in the slave cylinder to the hydraulic passage to be increased in pressure.

5. The vehicle brake system according to claim 1, wherein when a brake fluid pressure of at least one of the first main hydraulic passage and the second main hydraulic passage is to be reduced during the antilock brake control, the control device closes the master cut valve of the hydraulic passage to be reduced in pressure and opens the shut-off valve of the hydraulic passage to be reduced in pressure, and controls the electric actuator to drive the piston of the slave cylinder in a pressure reducing direction.

6. The vehicle brake system according to claim 1, wherein, when the brake fluid pressure of at least one of the first main hydraulic passage and the second main hydraulic passage is held during the antilock brake control, the control device closes the master cut valve of the hydraulic passage to be held and closes the shut-off valve of the hydraulic passage to be held.

7. The vehicle brake system according to claim 1, wherein, when a brake fluid pressure in at least one of the first main hydraulic passage and the second main hydraulic passage is to be reduced during the antilock brake control, the control device opens the master cut valve of the hydraulic passage to be reduced in pressure, closes the shut-off valve of the hydraulic passage to be reduced in pressure, and returns the brake fluid to the master cylinder side through the opened master cut valve.

8. The vehicle brake system according to claim 1, further comprising: a return flow passage that leads from the wheel brake to an atmospheric pressure side of the master cylinder or the reservoir; an on-off valve that opens and closes the return flow passage, wherein
the control device closes the master cut valve and the shut-off valve of the hydraulic passage to be reduced in pressure and opens the on-off valve when the brake fluid pressure in at least one of the first main hydraulic passage and the second main hydraulic passage is to be reduced during the antilock brake control.

9. The vehicle brake system according to claim 1, wherein the first main hydraulic passage is communicated with the wheel brake on a front wheel side of front and rear wheels of the vehicle, and the second main hydraulic passage is communicated with the wheel brake on a rear wheel side.

10. The vehicle brake system according to claim 1, wherein the control device executes a fluid suction control for sucking a brake fluid into the slave cylinder during the antilock brake control, wherein the control device closes the shut-off valve and controls the electric actuator to drive the piston of the slave cylinder in a decompression direction when the fluid suction control is executed.
